# EUROPEAN PATENT SPECIFICATION

(11) **EP 3 722 145 B1**
(45) Date of publication and mention of the grant of the patent: **13.04.2022**
(21) Application number: 18885275.0
(22) Date of filing: 06.12.2018
(51) Int. Cl.: B60N 2/12, B60N 2/08

(54) **SEAT SLIDING DEVICE**
SITZGLEITVORRICHTUNG
DISPOSITIF DE COULISSEMENT DE SIÈGE

(30) Priority: 07.12.2017 JP 2017235610
(43) Date of publication of application: 14.10.2020
(73) Proprietor: Delta Kogyo Co., Ltd., Aki-gun, Hiroshima 735-8501 (JP)
(72) Inventor: FUKUDA, Jun, Aki-gun Hiroshima 735-8501 (JP); UTSUNOMIYA, Kenshiro, Aki-gun Hiroshima 735-8501 (JP)
(74) Representative: Hoffmann Eitle
(86) International application number: PCT/JP2018/044914
(87) International publication number: WO 2019/112005

(56) References cited:
- JP-A- H02 279 432
- JP-A- 2015 044 562

## Description

### Technical Field

The present invention relates to a seat sliding device used in a seat for vehicles such as automobiles, airplanes, trains, ships, and buses, and in particular, relates to a seat sliding device including a walk-in mechanism.

### Background Art

A seat sliding device adjusts the position of a seat by sliding the seat forward/rearward, and when a seated person stops slides at a desired position, a slide locking mechanism locks upper rails to lower rails so that the seat is maintained at this position. In a type in which a seat back of a front seat is reclined forward to enable the getting on/off to/from a rear seat, a walk-in mechanism is further provided which reclines the seat back forward and, in linkage with this forward reclining operation, forcibly releases the locking of the aforesaid slide locking mechanism for front-rear position adjustment, thereby allowing the seat to move forward. Further, the walk-in mechanism includes a memory mechanism so that, when the front seat is moved rearward after moved forward, the seat can return to the predetermined slide adjustment position which is set immediately before the walk-in mechanism is operated.

As such a memory mechanism, JP 2014-166823 A discloses a mechanism having a memory pin that is disposed between an upper rail and a lower rail, is normally biased toward the upper rail by a coil spring but, at the time of the walk-in operation, stays on the lower rail side without following the forward moving upper rail. When returning rearward, the upper rail moves until a member on the upper rail side abuts on a stopper member provided in a case housing the memory pin and is locked again at this position, thereby returning to the slide adjustment position desired by a person seated in the front seat.

Another seat sliding device is shown in JP H02 279432 A forming the basis for the preamble of claim 1. Also JP 2015-044562 A discloses a seat sliding device of similar kind.

### Disclosure of the Invention

### Problems to Be Solved by the Invention

As described above, the memory pin of JP 2014-166823 is housed in the case and is biased in the upward direction by the coil spring also housed in the case, but at the time of the walk-in operation, is forcibly moved downward. On a lower rail bottom wall, a plate-shaped member called a memory guide which is long and has through holes formed at predetermined intervals along the longitudinal direction is fixed, and when the memory pin moves downward, its tip is engaged with the through hole to stay on the lower rail side. Thus, in the memory mechanism of JP 2014-166823, in order to make the memory pin stay on the lower rail side, the plate-shaped member called the memory guide having the through holes with which the memory pin is to be engaged needs to be provided on the lower rail, resulting in an increase in the number of parts to increase the weight. To avoid this, in some mechanism, engagement holes are provided directly in a bottom wall portion of a lower rail without a memory guide being provided on the lower rail, but this affects the strength and rigidity of the lower rails.

The present invention was made in consideration of the above, and has an object to provide a seat sliding device including a walk-in mechanism that does not need to additionally include a special member on a lower rail side in order to make a member having a memory function stay on the lower rail side, is not increased in the number of its parts and weight, and does not cause a decrease in the strength and rigidity of the lower rail.

### Means for Solving the Problems

To solve the above problem, the seat sliding device of the present invention includes the features of claim 1.

Preferably, the sidewall portion of the lower rail has an outer wall portion, an upper wall portion, and an inner wall portion, and the slide locking engagement portion is provided on the inner wall portion along the longitudinal direction, and
in the memory member:
the base portion has a substantially U-shaped cross section straddling the upper wall portion of the sidewall portion;
the engagement plate portion is folded upward from a lower edge portion of an inner surface portion, of the base portion, which is located on an inner side of the sidewall portion, and has an upper edge portion extending up to a position higher than a height of the base portion and biased in such a direction as to approach the slide locking engagement portion; and
the inner surface portion of the base portion has a cutout portion formed at a position facing the engagement plate portion, and the memory engagement portion formed in the engagement plate portion is engageable with the slide locking engagement portion through the cutout portion.

Preferably, the memory member is formed of a leaf spring material, and the engagement plate portion is located between the lower rail and the upper rail and has a function of reducing looseness between the lower rail and the upper rail.

Preferably, the memory member control mechanism includes an engagement plate control portion which, except at the time of the walk-in operation, comes into contact with the engagement plate portion of the memory member to displace the engagement plate portion in a direction such that the memory engagement portion separates from the slide locking engagement portion, and at the time of the walk-in operation, separates from the engagement plate portion.

Preferably, the slide locking mechanism includes: a locking plate member having the engagement portion for slide and supported on the upper rail to be movable up and down; and a locking release operation member which has a front portion projecting outward from a front side of the upper rail and engages/disengages the engagement portion for slide with/from the slide locking engagement portion when a rear portion of the locking release operation member is displaced by the up/down operation of the front portion to move the locking plate member up/down,
the memory member control mechanism includes:
an attachment bracket fixed to an upper wall portion of the upper rail;
a first link which is rotatably supported on the attachment bracket, and which, when in a normal posture, does not move down the locking plate member, but in a state in which a front portion of the first link moves downward, moves down the locking plate member by a front projecting piece which is provided on the front portion to project downward, to release the engagement with the slide locking engagement portion;
a second link which is rotatably supported on the attachment bracket, is capable of operating in a direction such that a front end side of the second link moves downward in accordance with the forward reclining of the seat back, rotates independently when the seat back is reclined forward except at the time of the walk-in operation, but when operating in the direction such that the front end moves downward at the time of the walk-in operation, operates the first link in the direction such that the front portion of the first link moves downward; and
a posture maintaining mechanism which maintains a posture that the first link has when the front portion moves downward, at the time of the walk-in operation, and
the engagement plate control portion is a projecting piece projecting downward at a rear portion of the first link, and when the first link is in the normal posture, comes into contact with the engagement plate portion of the memory member to elastically deform the engagement plate portion in the direction such that the memory engagement portion separates from the slide locking engagement portion, while being displaced upward to separate from the engagement plate portion when the front portion of the first link moves downward, at the time of the walk-in operation.

### Effect of the Invention

In the seat sliding device of the present invention, the memory member included in the walk-in mechanism is engageable with the slide locking engagement portion provided on the lower rail and used for locking at a normal slide adjustment position. Therefore, according to the present invention, the walk-in operation is enabled using the slide locking engagement portion for normal slide adjustment, without any need for providing a special member on the lower rail or forming, in the lower rail, an engagement hole with which the memory member is to be engaged, in order to make the memory member stay at the time of the walk-in operation, and therefore, the number of parts and the weight are not increased, and the strength and rigidity of the lower rail are not decreased.

### Brief Description of Drawings

[FIG. 1] FIG. 1 is a perspective view illustrating the schematic structure of a seat sliding device according to one embodiment of the present invention.
[FIGs. 2] FIG. 2(a) is a plan view of one slider of the seat sliding device in FIG. 1, and FIG. 2(b) is a side view thereof.
[FIGs. 3] FIG. 3(a) is an explanatory exploded perspective view of a slide locking mechanism of the slider, and FIG. 3(b) is an enlarged perspective view of the slide locking mechanism.
[FIG. 4] FIG. 4 is a perspective view illustrating an attachment positional relation of the slider, a memory member, and a memory member control mechanism.
[FIGs. 5] FIG. 5(a) is a perspective view of the memory member seen from a base portion side, FIG. 5(b) is a perspective view of the memory member seen from an engagement plate portion side, and FIG. 5(c) is a rear view thereof.
[FIG. 6] FIG. 6 is an explanatory exploded perspective view of the memory member control mechanism.
[FIGs. 7] FIG. 7(a) is a perspective view of the slider seen from a rear end side, with the memory member and the memory member control mechanism attached thereto, FIG. 7(b) is a sectional view taken along the A-A line in FIG. 7(a) and illustrates a state in which memory engagement portions of the memory member are not engaged with slide locking engagement portions, and FIG. 7(c) is a sectional view taken along the A-A line in FIG. 7(a) and is a view illustrating a state in which the memory engagement portions of the memory member are engaged with the slide locking engagement portions.
[FIGs. 8] FIGs. 8(a) to (c) are explanatory views of the operation of normal slide position adjustment, and FIG. 8(d) is a view seen from the arrow A in FIG. 8(c).
[FIGs. 9] FIGs. 9(a) to (c) are explanatory views of a walk-in operation mechanism.
[FIGs. 10] FIGs. 10(a) to (b) are explanatory views of the operation at the time of a walk-in operation, and FIG. 10(c) is an enlarged view of the vicinity of a rear portion in the state in FIG. 10(b).
[FIGs. 11] FIGs. 11(a) to (b) are explanatory views of the operation at the time of the walk-in operation.
[FIGs. 12] FIG. 12(a) is a view seen from the arrow A in FIG. 10(a) when a rear projecting piece elastically deforms the engagement plate portion of the memory member, FIG. 12(b) is a view seen from a slightly different angle from that of FIG. 12(a), FIG. 12(c) is a view seen from the arrow B in FIG. 10(b) when the rear projecting piece separates from the engagement plate portion of the memory member, and FIG. 12(d) is a view seen from a slightly different angle from that of FIG. 12(c).
[FIGs. 13] FIGs. 13(a) to (c) are explanatory views of the operation when a walk-in state is returned to an original state.
[FIGs. 14] FIG. 14(a) is a view seen from the arrow A in FIG. 13(b), and FIG 14(b) is a view seen from the arrow B in FIG. 13(c).

### Description of Embodiments

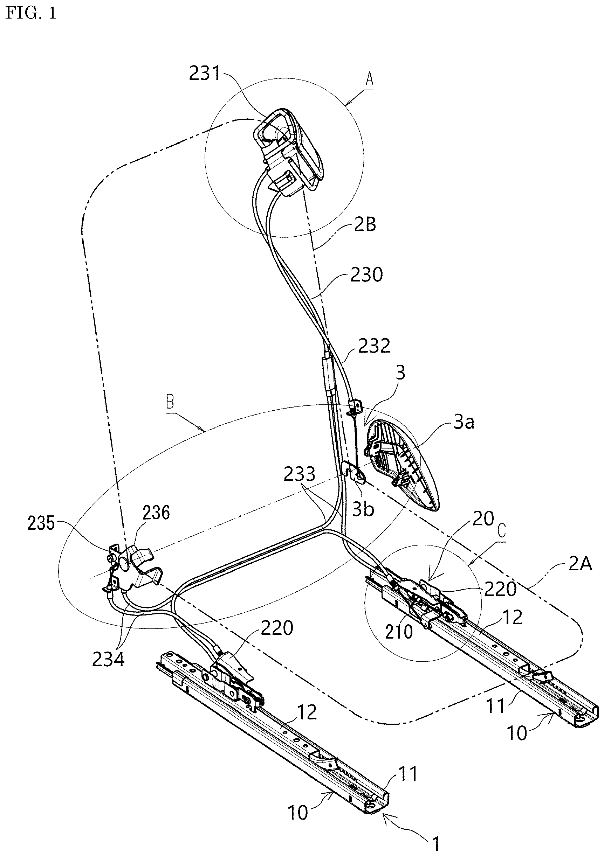

The present invention will be hereinafter described in more detail based on an embodiment illustrated in the drawings. As illustrated in FIG. 1, a seat sliding device 1 has a pair of left and right sliders 10 disposed at a predetermined interval in the width direction of a vehicle body, and the sliders 10 each include a lower rail 11, an upper rail 12, a slide locking mechanism 15, a walk-in mechanism 20, and so on. The lower rails 11 are fixed to a vehicle floor, and left and right side frames of a seat cushion 2A are coupled to the respective upper rails 12. Incidentally, on a rear portion of the seat cushion 2A, a reclinable seat back 2B is provided with a reclining adjuster 3 therebetween.

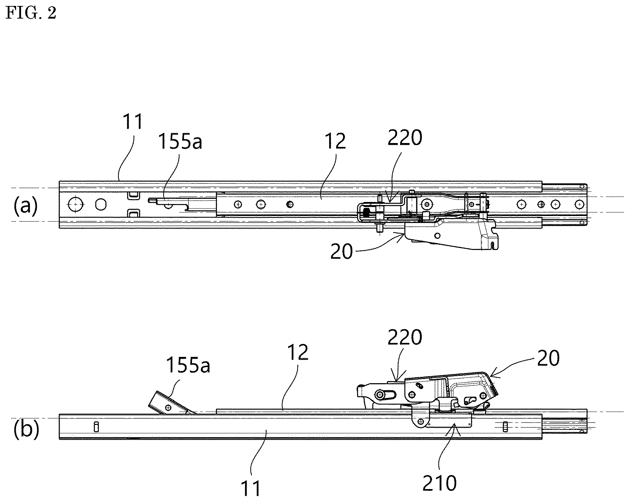

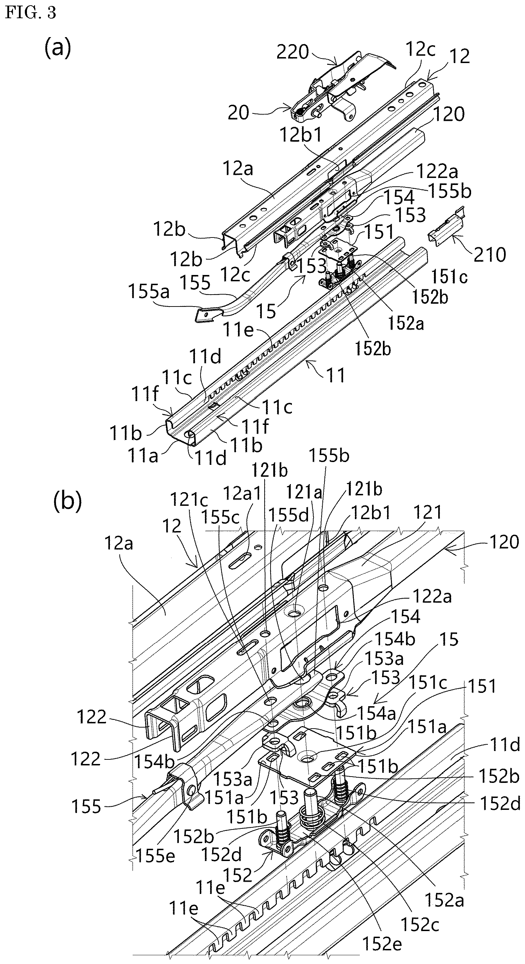

As illustrated in FIGs. 2 and FIGs. 3, the lower rail 11 has a bottom wall portion 11a, a pair of outer wall portions 11b, 11b rising from both sides of the bottom wall portion 11a to face each other, a pair of upper wall portions 11c, 11c which are bent inward from upper edges of the outer wall portions 11b, 11b and whose facing edges are a predetermined-interval apart from each other, and inner wall portions 11d, 11d bent downward from inner edges of the upper wall portions 11c, 11c and extending to a height-direction substantially middle position of the outer wall portions 11b, 11b. The outer wall portions 11b, 11b, the upper wall portions 11c, 11c, and the inner wall portions 11d, 11d form sidewall portions 11f, 11f on longitudinal-direction both sides of the lower rail 11. Therefore, the lower rail 11 as a whole is formed in a substantially U-shape with its upper surface being open in a sectional view in a width direction orthogonal to the longitudinal direction. On lower edge portions of the two inner wall portions 11d, 11d, slide locking engagement portions 11e, 11e formed of tooth portions projecting downward in a comb-teeth shape are formed.

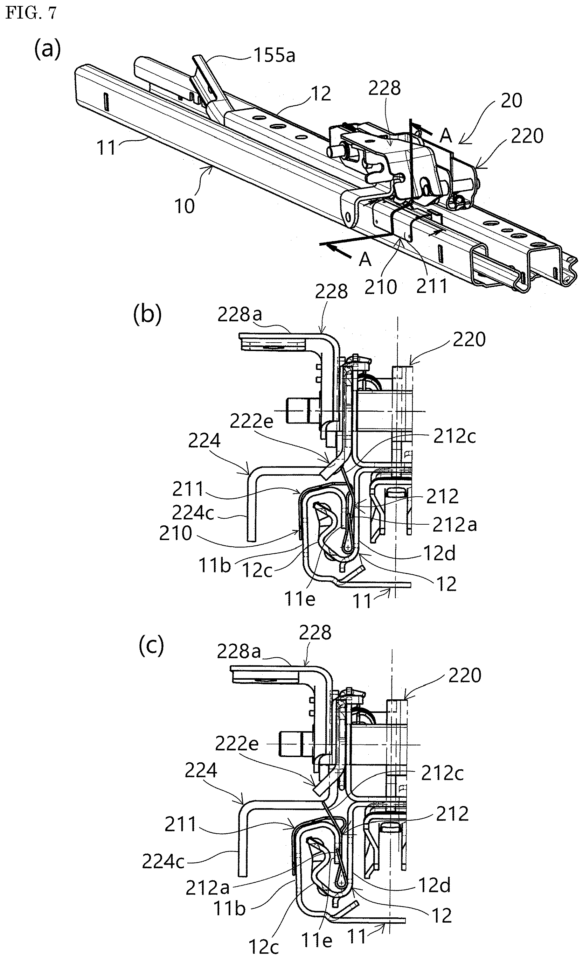

The upper rail 12 has an upper wall portion 12a and a pair of upper-side sidewall portions 12b, 12b bent downward from both sides of the upper wall portion 12a to face each other, and is formed in a substantially U-shape with its lower surface being open in a sectional view in the width direction. It further has folded pieces 12c, 12c folded outer upward from lower end portions of the upper-side sidewall portions 12b, 12b. The upper rail 12 is disposed such that the folded pieces 12c, 12c are located between the outer wall portions 11b, 11b and the inner wall portions 11d, 11d of the lower rail 11 so as to face the outer wall portions 11b, 11b (see FIGs. 7(b), (c)).

Next, the slide locking mechanism 15 of this embodiment will be described. As illustrated in FIGs. 3(a), (b), the slide locking mechanism 15 includes a locking plate 151, a slide locking mechanism support member 152, wedge structures 153, 153, a release plate 154, a locking release operation member 155, and so on, and is supported by an upper bracket 120.

The upper bracket 120 is formed in a substantially C-shape in a width-direction sectional view, having an upper surface portion 121 and a pair of side surface portions 122, 122 bent downward from width-direction side edges of the upper surface portion 121, and is disposed on an inner side of the upper rail 12 with its open side facing the lower rail 11 side, and its appropriate portions are fixed to the upper wall portion 12a and the sidewall portions 12b, 12b of the upper rail 12 by welding or the like, preferably, laser welding.

In the side surface portions 122, 122 of the upper bracket 120, window portions 122a, 122a are penetratingly formed at an appropriate position, and in the sidewall portions 12b, 12b of the upper rail 12 as well, window portions 12b1, 12b1 are penetratingy formed at a corresponding position. The locking plate 151 is formed in a substantially quadrangular shape in a plan view and is disposed with its pair of facing side edge portions 151a, 151a projecting outward from these window portions 122a, 12b1. In each of the side edge portions 151a, 151a, a plurality of hole portions 151b, 151b are formed to be arranged along the longitudinal direction of the lower rail 11 and the upper rail 12. The longitudinally adjacent hole portions 151b, 151b are formed at an interval equal to an interval between the longitudinally adjacent slide locking engagement portions 11e, lie of the lower rail 11, and the hole portions 151b, 151b are formed large enough for the the slide locking engagement portions 11e, 11e to be inserted thereto.

The slide locking mechanism support member 152 includes a base plate portion 152e, a locking plate guide shaft 152a projecting from the base plate portion 152e in a direction toward the upper surface portion 121 of the upper bracket 120 (direction toward the upper wall portion 12a of the upper rail 12), and a pair of wedge guide shafts 152b 152b arranged at a predetermined interval along the longitudinal direction of the upper rail 12 to sandwich the locking plate guide shaft 152a and projecting in the same direction as the locking plate guide shaft 152a (direction toward the upper wall portion 12a of the upper rail 12).

The base plate portion 152e is fixed to the vicinity of lower portions of the side surface portions 122, 122 of the upper bracket 120 by welding or the like, preferably laser welding while the locking plate 151, the wedge structures 153, the release plate 154, and the locking release operation member 155 are located between the base plate portion 152e and the upper surface portion 121 of the upper bracket 120. This structure, that is, providing the base plate portion 152e, supporting the locking plate guide shaft 152a and the wedge guide shafts 152b, 152b by the base plate portion 152e, and fixing the base plate portion 152e to the upper bracket 120 eliminates a need for forming worked holes or the like for supporting them and does not cause a strength decrease of the upper rail 12 as compared with a case where the guide shafts 152a, 152b and so on are supported directly by the upper rail 12.

The locking plate 151 is disposed such that the locking plate guide shaft 152a is inserted to a guide hole 151c penetratingly formed at the center of the locking plate 151. Further, the locking plate guide shaft 152a is loaded with a spring 152c for locking plate which is an elastic support means elastically supporting the locking plate 151 so as to bias it in the direction toward the upper surface portion 121 of the upper bracket 120, that is, upward. Further, the wedge guide shafts 152b, 152b are inserted to insertion holes 153a, 153a of the wedge structures 153, 153, and the wedge structures 153, 153 are biased upward by springs 152d, 152d for wedge

The release plate 154 has a middle insertion hole 154a and end insertion holes 154b, 154b provided at positions a predetermined distance apart from the middle insertion hole 154a in the direction along the longitudinal direction of the upper rail 12. The release plate 154 is disposed on the upper surface portion 121 side of the upper bracket 120, that is, on an upper side of the locking plate 151 and the wedge structures 153, 153. To the middle insertion hole 154a, the locking plate guide shaft 152a inserted to the guide hole 151c of the locking plate 151 is inserted, and to the end insertion holes 154b, 154b, the wedge guide shafts 152b, 152b penetrating through the insertion holes 153a, 153a of the wedge structures 153, 153 are inserted. Incidentally, in the upper surface portion 121 of the upper bracket 120, a middle placement hole 121a and end placement holes 121b, 121b are formed at positions corresponding to the middle insertion hole 154a and the end insertion holes 154b, 154b.

The locking release operation member 155 has a predetermined length and is disposed on the inner side of the upper rail 12. The locking release operation member 155 has a front end portion 155a projecting from a front end of the upper rail 12 (see FIGs. 2 and FIG. 3(a)), and a grip portion (not illustrated) is coupled to this front end portion 155a so that an operator can operate it up and down. When the locking release operation member 155 rotates about its longitudinal-direction middle portion such that the front end portion 155a is displaced up/down, its rear end portion 155b is displaced in the opposite direction. Therefore, the locking release operation member 155 is disposed such that its rear end portion 155b presses the release plate 154 downward. In this embodiment, as illustrated in FIGs. 3(a), (b), the rear end portion 155b is disposed between the release plate 154 and the upper surface portion 121 of the upper bracket 120 so that the rear end portion 155b can press the release plate 154 downward. Specifically, in the rear end portion 155b, through holes 155c, 155d corresponding to the front-end-side end insertion hole 154b and the middle through hole 154a of the release plate 154 are formed, and one of the wedge guide shafts 152b and the locking plate guide shaft 152a are inserted to the through holes 155c, 155d respectively. Accordingly, the rear end portion 155b is capable of pressing the release plate 154 downward when being displaced downward along these guide shafts 152a, 152b.

Incidentally, in order to operate in the above-described manner, the locking release operation member 155 is provided such that a projecting portion 155e provided at its longitudinal-direction middle portion is supported between the side surface portions 122, 122 at a front end portion of the upper bracket 120. After the members are disposed in this manner, upper end portions of the locking plate guide shaft 152a and the wedge guide shafts 152b, 152b are inserted to the aforesaid middle placement hole 121a and end placement holes 121b, 121b formed in the upper surface portion 121 of the upper bracket 120.

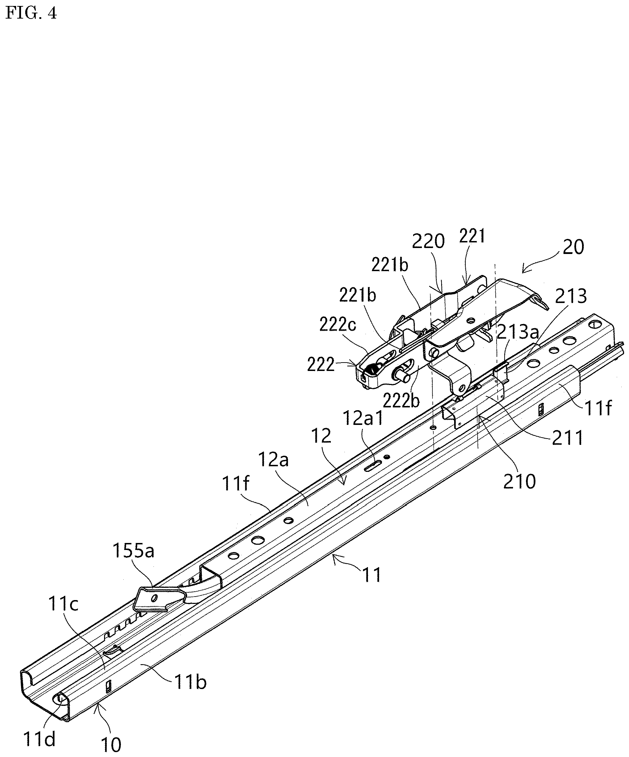

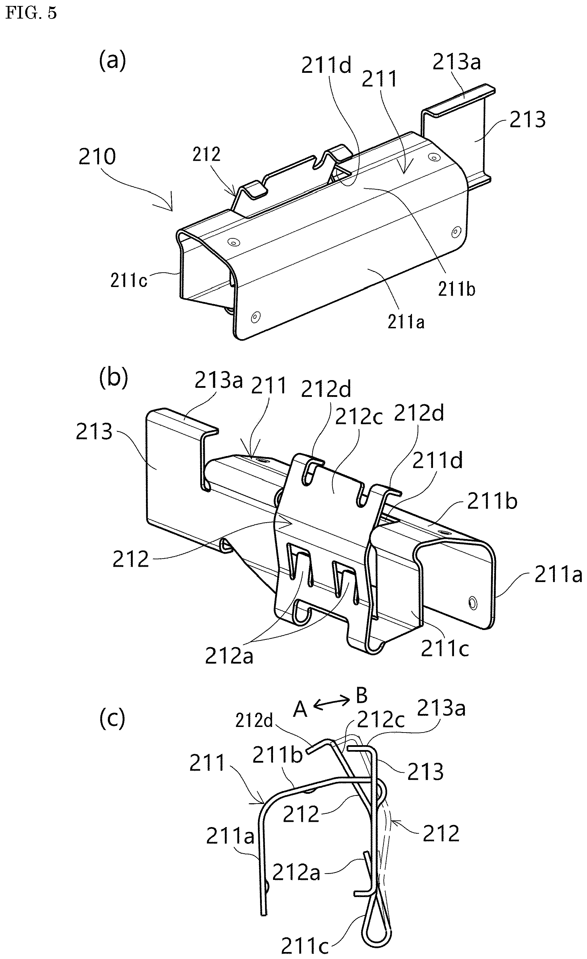

Next, the walk-in mechanism 20 will be described. The walk-in mechanism 20 includes a memory member 210, a memory member control mechanism 220, and a walk-in operation mechanism 230. As illustrated in FIGs. 5, the memory member 210 has a base portion 211 and an engagement plate portion 212, which are formed integrally of a leaf spring material. The base portion 211 has a length of about several cm to ten and several cm along the longitudinal direction of the lower rail 11, and is formed in a substantially U-shape in a sectional view, having an outer surface portion 211a, an upper surface portion 211b, and an inner surface portion 211c, and as illustrated in FIG. 4, it is disposed on one of the sidewall portions 11f on both longitudinal-direction sides of the lower rail 11 with its open side facing downward, so as to straddle the upper wall portion 11c and extend along the outer wall portion 11b and the inner wall portion 11d sandwiching the upper wall portion 11c. The base portion 211 is disposed in a small space between the upper rail 12 and the lower rail 11 while thus straddling the sidewall portion 11f of the lower rail 11, and the memory member 210 including the base portion 211 is formed of the leaf spring material, and accordingly the memory member 210 of this embodiment not only has its own function of maintaining the slide adjustment position at the time of the walk-in operation but also exhibits a wedge effect between the lower rail 11 and the upper rail 12 and as a result has a function of reducing the looseness between the lower rail 11 and the upper rail 12 (in particular, the wobbling of the lower rail 11 trying to vibrate in the width direction to/from the upper rail 11) to increase the rigidity of the whole slider 10. Further, in this embodiment, as illustrated in FIG. 1, the memory member 210 is provided on each of the left and right sliders 10, 10. Note that, since the memory members 210 are disposed on the inner sides of the lower rails 11, 11, only the memory member 210 on the left slider 10 is seen in FIG. 1. Therefore, since the wedge function due to the elasticity of the memory members 210 is exhibited for the left and right sliders 10, 10, the wobbling in the whole seat sliding device 1 is reduced. This contributes to the smoothness of the locking operation of the slide locking mechanism 15 to the slide locking engagement portions 11e and the smoothness of a later-described engagement operation of the memory member 210 with the slide locking engagement portions 11e. Further, the base portion 211 is capable of sliding along the longitudinal direction of the one sidewall portion 11f of the lower rail 11, that is, in the front-rear direction of the seat cushion 2A. Further, as illustrated in FIGs. 5, on the inner surface portion 211c of the base portion 211, an L-shaped stopper piece 213 rising upward and having an upper portion 213a bent to project in the outer surface portion 211a direction is provided at an end portion closer to the rear side of the lower rail 11.

The engagement plate portion 212 extends downward from a longitudinal-direction partial range of the inner surface portion 211c of the base portion 211 and is folded outward from a lower edge of the inner surface portion 211c to extend upward. In the engagement plate portion 212, memory engagement portions 212a which are to be engaged with the slide locking engagement portions 11e, 11e are formed at a position that is its height-direction middle and corresponds to the slide locking engagement portions 11e of the lower rail 11. The engagement plate portion 212 faces the inner surface portion 211c of the base portion 211 since it is folded outward from the inner surface portion 211c of the base portion 211 to extend upward, but in the inner surface portion 211c, a region facing the engagement portion 212 is a cutout portion 211d. This cutout portion 211d is formed in a range from the inner surface portion 211c side up to a width-direction substantially middle position of the upper surface portion 211b, and in the range corresponding to the cutout portion 211d, the slide locking engagement portions 11e directly face the engagement plate portion 212 through the cutout portion 211d. Further, the engagement plate portion 212 is given spring force biasing it toward this cutout portion 211d so that it reaches a position where it enters the inside of the cutout portion 211d in a normal state. Therefore, the memory engagement portions 212a are constantly biased in such a direction as to be engaged with the slide locking engagement portions 11e which they face through the cutout portion 211d (the arrow A direction in FIG. 5(c), that is, a direction toward the solid line position from the broken line position).

In the engagement plate portion 212, a region higher than the memory engagement portions 212a is an inclined surface 212c slightly inclined in such a direction as to approach the cutout portion 212d, and on both sides of the inclined surface 212c, memory-side projecting pieces 212d, 212d projecting further inward are provided. When a later-described engagement plate control portion (rear projecting piece 222e) of the memory member control mechanism 220 tries to enter a space that is on the inner side of the memory-side projecting pieces 212d, 212d and is between the inclined surface 212c and the cutout portion 211d, the inclined surface 212c is elastically deformed so as to be raised in a direction in which it separates from the cutout portion 212d (the arrow B direction in FIG. 5(c), that is, a direction from the solid line position toward the broken line position), resulting in the release of the engagement of the memory engagement portions 212a with the slide locking engagement portions 11e. When the engagement plate control portion (rear projecting piece 222e) separates, the memory engagement portions 212a are engaged with the slide locking engagement portions 11e again owing to the restoring force of the engagement plate portion 212.

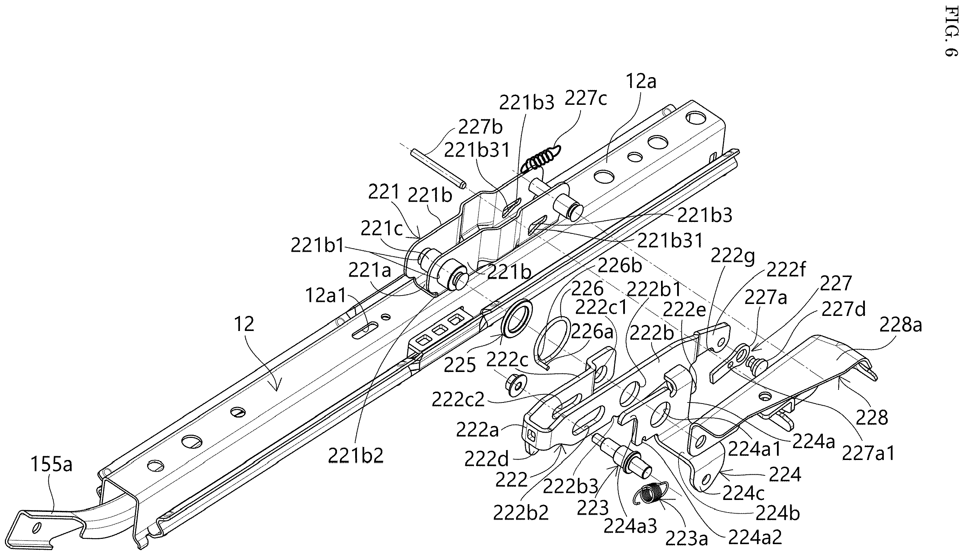

As illustrated in FIG. 6, the memory member control mechanism 220 has an attachment bracket 221 fixed to an upper surface of the upper wall portion 12a of the upper rail 12. The attachment bracket 221 has a bottom surface portion 221a and side surface portions 221b, 221b rising from width-direction both sides of the bottom surface portion 221a, and is disposed such that the bottom surface portion 221a is fixed to the upper surface of the upper wall portion 12a close to a rear end of the upper rail 12 by welding or the like and the two side surface portions 221b, 221b extend along the longitudinal direction of the upper rail 12 and face each other.

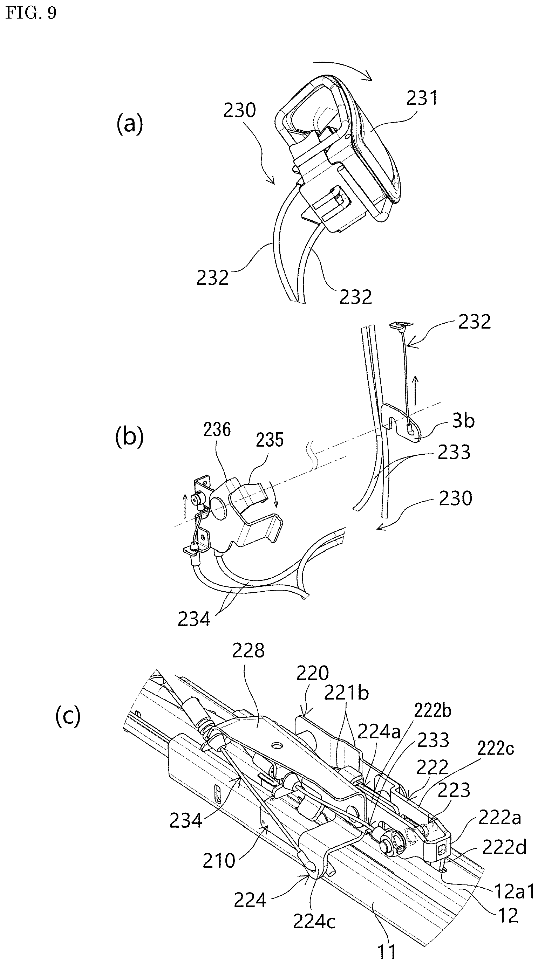

On the attachment bracket 221, a first link 222 is rotatably provided. The first link 222 includes a front surface plate portion 222a facing a longitudinal-direction front side of the upper rail 12 and side surface plate portions 222b, 222c bent rearward from width-direction both sides of the front surface plate portion 222a to face each other, and is formed in a substantially C-shape in a plane view. Note that the side surface plate portion 222b has such a length as to extend more rearward than the other side surface plate portion 222c. At a longitudinal-direction substantially middle portion of the side surface plate portion 222b and near a rear portion of the other side surface plate portion 222c, through holes 222b1, 222c1 are formed respectively, and the first link 222 is disposed such that the side surface plate portion 222b is stacked on an outer surface of one of the side surface portions 221b of the attachment bracket 221, the other side surface plate portion 222c is stacked on an inner surface portion of the other side surface portion 221b of the attachment bracket 221 (see FIG. 4 and FIG. 9(c)), the through holes 222b1, 222c1 are made to communicate with shaft insertion holes 221b1, 221b1 formed in front portions of the side surface portions 221b, 221b of the attachment bracket 221, and a shaft portion 221c for link is inserted to the shaft insertion holes 221b1, 221b1 and the through holes 222b1, 222c1. Consequently, the first link 222 is supported to be rotatable about the shaft portion 221c for link.

On the front surface plate portion 222a, a front projecting piece 222d projecting downward is provided. In the upper wall portion 12a of the upper rail 12, a through hole 12a1 for projecting piece which the front projecting piece 222d can enter is formed at a position corresponding to the front projecting piece 222d, and when the first link 222 rotates about the shaft portion 221c for link in a direction such that the front portion plate portion 222a side moves down, the front projecting piece 222d enters the inside of the through hole 12a1 for projecting piece, and when the first link 222 rotates in the opposite direction, the front projecting piece 222d separates from the through hole 12a1 for projecting piece. When entering the inside of the through hole 12a1 for projection, the front projecting piece 222d further presses down a portion of the locking release operation member 155 of the slide locking mechanism 15 which portion is closer to the rear end portion 155b than the projecting portion 155e, through a through hole 121c (see FIG. 3(b)) provided in the upper surface portion 121 of the upper bracket 120 at a position corresponding to the through hole 12a1 for projection. Consequently, the release plate 154 is pressed downward to release the locking of the slide locking mechanism 15.

At a position more forward than the aforesaid through holes 222b1, 222c1 formed in the facing side surface plate portions 222b, 222c, long holes 222b2, 222c2 which are long along the longitudinal direction of the side surface plate portions 222b, 222c are formed. A first shaft 223 is inserted to the long holes 222b2, 222c2. The first shaft 223 is biased in such a direction as to be pulled toward the front portion plate 222a by a spring 223a for first shaft formed of a coil spring because one end of the spring 223a for first shaft is hooked to the front portion plate portion 222a and the other end thereof is engaged with the first shaft 223.

The memory member control mechanism 220 further has a second link 224 including an action plate portion 224a disposed between the side surface plate portion 222b of the first link 222 and the one side surface portion 221b of the attachment bracket 221, a lateral plate portion 224b extending in a lateral direction from a lower edge of the action plate portion 224a up to an outer side of the outer wall portion 11b forming the sidewall portion 11f of the lower rail 11, and a vertical plate portion 224c bent downward from an outer edge of the lateral plate portion 224b, all of which are integrally formed. At a substantially center portion of the action plate portion 224a, a through hole 224a1 is formed, and the aforesaid shaft portion 221c for link is inserted to the through hole 224a1, so that the second link 224 is also rotatable about the shaft portion 221c for link.

Between the action plate portion 224a of the second link 224 and the one side surface portion 221b of the attachment bracket 221, an annular collar 225 is interposed, and therearound, a spring 226 for link being a spring biasing both the first link 222 and the second link 224 in a direction such that their front end sides are raised is supported. The spring 226 for link is formed of a torsion coil spring, its annular portion is supported around the collar 225, its hooks 226a, 226b project in opposite directions, and the hook 226a is engaged both with a cutout 222b3 formed in a lower edge of the side surface plate portion 222b of the first link 222 and with a cutout 224a2 formed in a lower edge of the action plate portion 224a of the second link 224. The other hook 226b is engaged with a cutout 221b2 provided in a lower front edge of the one side surface portion 221b of the attachment bracket 221. The restoring force of the spring 226 for link formed of the torsion coil spring acts in a radially outward direction to bias both the first link 222 and the second link 224 in the direction such that their front end sides are raised as described above.

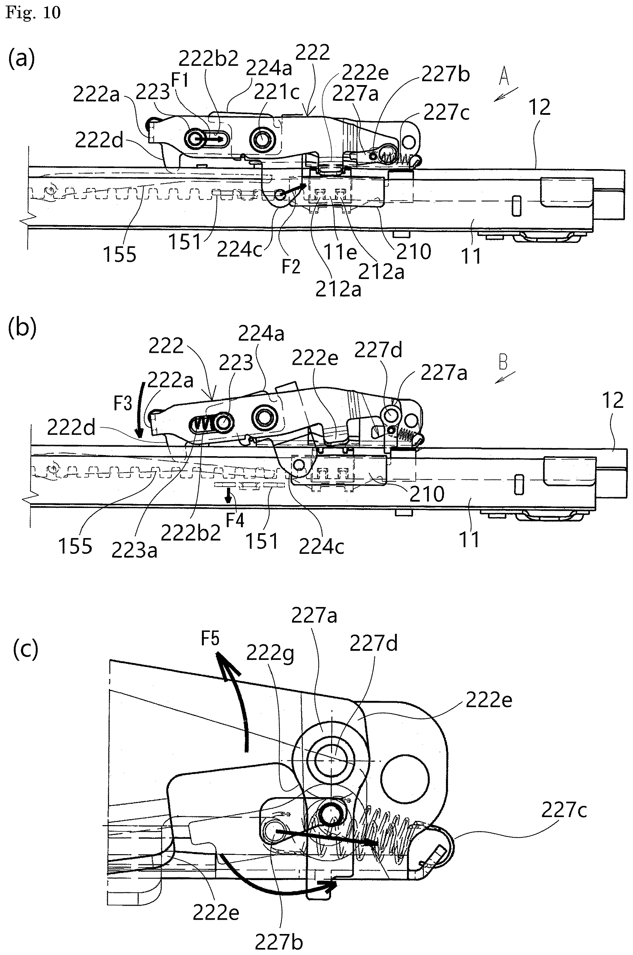

The action plate portion 224a of the second link 224 includes a second link projecting portion 224a3 projecting forward. The second link projecting portion 224a3 projects at a front end upper portion, of the action plate portion 224a, which is a position higher than the first shaft 223. Further, it is provided in such a positional relation that, when the second link 224 rotates in such a direction as to displace the second link projecting portion 224a3 downward against the restoring force of the aforesaid spring 226 for link, in a case where the first shaft 223 is moving rearward in the long holes 222b2, 222c2, the second link projecting portion 224a3 comes into contact with the first shaft 223 to press the front end side of the first link 222 downward, and in a case where the first shaft 223 is moving froward in the long holes 222b2, 222c2 (see FIG. 10(a)), the second link projecting portion 224a3 does not come into contact with the first shaft 223.

On the first link 222, a posture maintaining mechanism 227 is provided which, when the front portion of the first link 222 moves downward, maintains this posture. The posture maintaining mechanism 227 has a stopper link 227a, a posture maintaining pin 227b, and a spring 227c for posture maintaining pin. The stopper link 227a has a predetermined length and is disposed with its one end portion being rotatably supported by a second shaft 227d at a rear end portion 222f of the first link 222. At a middle portion of the stopper link 227a, a posture maintaining pin insertion hole 227a1 is formed. Further, in the side surface portions 221b, 221b of the attachment bracket 221, at a position slightly more forward than their rear edges, guide holes 221b3, 221b3 being long holes which are long in the front-rear direction are formed. The guide holes 221b3, 221b3 are in a shape having inclined portions 221b31, 221b31 so that lower edges of their inner peripheries are lower at a position close to their front ends and gradually become higher as they go toward a rear end direction. The posture maintaining pin 227b is inserted to the posture maintaining pin insertion hole 227a1 of the stopper link 227a and is disposed so as to extend between the guide holes 221b3, 221b3.

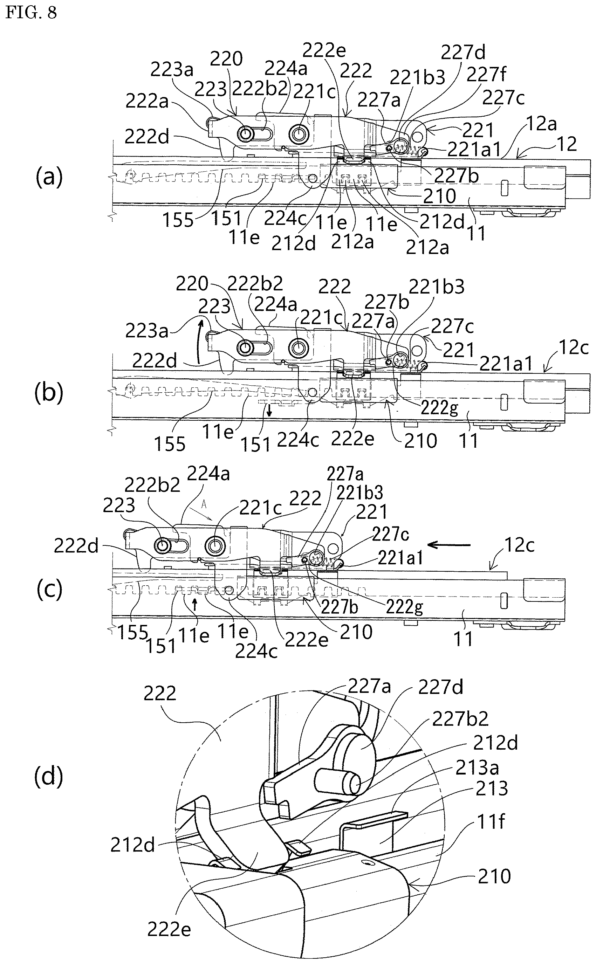

The spring 227c for posture maintaining pin has one end engaged with the posture maintaining pin 227b and the other end engaged with a spring engagement portion 221a1 provided at a rear end portion of the attachment bracket 221 (see FIGs. 8(a) to (c)). The engagement position of the spring engagement portion 221a1 is lower than the rotation center position of the second shaft 227d supporting the stopper link 227a. Accordingly, the spring 227c for posture maintaining pin biases the stopper link 227a in a direction such that the stopper link 227a rotates about the second shaft 227d rearward from a downward side.

The first link 222 has a stepped portion 222g in front of a lower portion of the rear end portion 222f at which the second shaft 227d is inserted. Further, the first link 222 is biased by the spring 226 for link in the direction such that its front portion side is located upward, that is, the later-described rear projecting piece 222e is located between the memory-side projecting pieces 212d, 212d (see FIGs. 8(a) to (d)). The stepped portion 222g is provided at such a position that a space where the posture maintaining pin 227b can be sandwiched between the stepped portion 222g and front ends of inner peripheral edges of the guide holes 221b3, 221b3 in the aforesaid posture, that is, in the posture where the first link 222 is substantially parallel along the upper surface of the upper wall portion 12a of the upper rail 12 (see FIGs. 8(b), (c)). Therefore, in the state in which the first link 222 has the posture substantially parallel to the upper wall portion 12a of the upper rail 12 in a side view, since the rearward movement of the posture maintaining pin 227b is restricted by the stepped portion 222g, the posture maintaining pin 227b is located close to the front ends of the inner peripheries of the guide holes 221b3, 221b3, and the stopper link 227a is in a posture in which its lower end directed forward (see FIGs. 8(a) to (d)).

Here, as illustrated in FIGs. 8(a) to (d), the first link 222 has the engagement plate control portion which is to be engaged with the engagement plate portion 212 of the memory member 210. The engagement plate control portion is a member which controls the engagement/separation of the memory engagement portions 212a with/from the slide locking engagement portions 11e, and in this embodiment, is the projecting piece ("rear projecting piece") 222e capable of separating from and coming into contact with the engagement plate portion 212. The rear projecting piece 222e is provided on the side surface plate portion 222b on the sidewall portion 11f side of the lower rail 11 on which the memory member 210 is disposed, at a position that is more rearward than the support position of the first shaft 223 and is more forward than the second shaft 227d supporting the stopper link 227a.

The rear projecting piece 222e projects to a position lower than the lower edge of the side surface plate portion 222b, and in addition, in this embodiment, has a shape projecting in such a direction as to more approach the sidewall portion 11f of the facing lower rail 11 as it goes more downward (see FIG. 8(d)). The width of the rear projecting piece 222e (length along the longitudinal direction of the upper rail 12) is substantially equal to or slightly narrower than the width between the memory-side projecting pieces 212d, 212d projecting at both ends of the engagement plate portion 212 in the memory member 210. As described above, the rear projecting piece 222e projects in the direction in which it approaches the sidewall portion 11f of the lower rail 11, and in the memory member 210 corresponding to this, the inclined surface 212c inclines toward the slide locking engagement portions 11e (see FIGs. 7(b), (c)). Therefore, when the rear projecting piece 222e is located between the memory-side projecting pieces 212d, 212d, the inclined surface 212c between the memory-side projecting pieces 212d, 212d is lifted up by the rear projecting piece 222e in such a direction as to separate from the slide locking engagement portions 11e as illustrated in FIG. 7(b). This brings the memory engagement portions 212a into a state in which they do not enter the space between the adjacent slide locking engagement portions 11e, 11e.

In the first link 222, on an outer surface of the side surface plate portion 222b on the side where the memory member 210 is disposed, a cable bracket 228 with a substantially inverted L-shaped cross section including a top plate 228a projecting outward from a position close to an upper edge of the side surface plate portion 222b is fixed. This cable bracket 228 has a function of protecting cables of the walk-in operation mechanism 230 disposed under the top plate 228a.

Note that the slide locking mechanism 15 and the memory member 210 and the memory member control mechanism 220 of the walk-in mechanism 20 described above are provided on each of the left and right sliders 10, 10 as illustrated in FIG. 1.

As illustrated in FIG. 1 and FIGs. 9, the walk-in operation mechanism 230 includes a walk-in lever 231 and cables for walk-in (first, second, third cables 232, 233, 234). First, the walk-in lever 231 is provided on one side portion (shoulder portion) of an upper portion of the seat back 2B, for instance. The first cable 232 is coupled to the walk-in lever 231, and this first cable 232 is coupled to a locking release plate 3b of the reclining adjuster 3 used at the time of a normal reclining operation. The reclining adjuster 3 has a built-in locking mechanism (not illustrated) for positioning the seat back 2B at a desired reclining angle. The locking mechanism performs the locking by rotating a shaft portion of its cam in one direction, thereby moving a locking plate having outer teeth radially outward to make the locking plate engaged with internal teeth of an internal gear, while releasing the locking by rotating the cam in the opposite direction to move the locking plate inward, thereby disengaging the teeth.

At the time of the normal adjustment of the reclining angle, the reclining lever 3a coupled to the shaft portion of the cam is operated to release the locking mechanism. The locking release plate 3b is also coupled to the shaft portion of the cam and in the normal state, is biased by a not-illustrated spring member in a direction such that the locking is not released. Then, when the locking release plate 3b is rotated by the first cable 232 in the direction opposite to its biased direction, the locking mechanism is released without the reclining lever 3a being operated.

On the seat back 2B, on a side opposite to the side where the locking release plate 3b is provided, a coupling plate 235 to which the two third cables 234, 234 are connected is rotatably provided. In the normal state, the coupling plate 235 is biased in a rear rotation direction by a not-illustrated spring member. The third cables 234, 234 each have one end connected to the coupling plate 235 at such a position that force pulling the third cables 234, 234 do not act in the normal state. On the other hand, on the coupling plate 235, a bracket 236 fixed to the seat back 2B is provided so as to be capable of coming into contact with the coupling plate 235 when the seat back 2B is reclined forward by a predetermined angle. Specifically, when the seat back 2B is reclined forward by the predetermined angle, the coupling plate 235 is rotated forward by the bracket 236 against the biasing force of the spring member to pull the third cables 234, 234. When the seat back 2B returns rearward from the froward reclining position by the predetermined angle, the bracket 236 separates from the coupling plate 235 and the coupling plate 235 returns to the original position owing to the spring member.

One end of the second cable 233 is further coupled to the walk-in lever 231. The second cable 233 bifurcates in the middle, and the other ends of the second cables 233, 233 are coupled to the first shafts 223, 223 of the memory member control mechanisms 220, 220 provided on the left and right sliders 10, 10 respectively (see FIG. 9(c)).

The operation of this embodiment will be described next. First, in a state in which the walk-in mechanism 20 is in non-operation, as illustrated in FIGs. 8, the rear projecting piece 222e being the engagement plate control portion of the memory control mechanism 220 is located between the memory-side projecting pieces 212d, 212d of the memory member 210 to separate the inclined surface 212c between the memory-side projecting pieces 212d, 212d from the slide locking engagement portions 11e, which is the state in which the memory engagement portions 212a do not enter the space between the adjacent slide-locking engagement portions 11e, 11e (state in FIG. 7(b) and FIGs. 8(a) to (c)). Further, the slide locking mechanism 15 at the time of the normal slide position adjustment is in the locking state (state in FIG. 8(a)) in which the hole portions 151b, 151b formed in the side edge portions 151a, 151a of the locking plate 151 are engaged with the slide locking engagement portions 11e, 11e formed in the longitudinal-direction both sides of the lower rail 11.

To release the locking state, the front end portion 155a of the locking release operation member 155 is first operated upward. Consequently, its rear end portion 155b moves relatively downward. The rear end portion 155b which is displaced downward presses the release plate 154 downward. When the release plate 154 moves downward, the locking plate 151 is also displaced downward against the resiliency of the spring 152c for locking plate, so that the hole portions 151b, 151b of the locking plate 151 separate from the teeth tips of the slide locking engagement portions 11e, 11e of the lower rail 11, resulting in the locking release state. Consequently, it is possible to move the upper rail 12 forward/rearward relative to the lower rail 11 to make the position adjustment.

At this time, as illustrated in FIG. 8(d), the rear projecting piece 222e being the engagement plate control portion of the memory control mechanism 220 of the walk-in mechanism 20 is located between the memory-side projecting pieces 212d, 212d of the memory member 210, which is the state in which the memory engagement portions 212a are not engaged with the slide locking engagement portions 11e. Further, the front portion side of the first link 222 is biased upward by the spring 226 for link, and the front projecting piece 222d is in a state of not projecting to a position below the through hole 12a1 for projecting piece and the stopper link 227a of the posture maintaining mechanism 227 is in a posture in which its lower end is directed forward. Therefore, as illustrated in FIGs. 8(a) to (c), when the upper rail 12 is slide-adjusted forward/rearward, the memory member control mechanism 220 fixed to the upper wall portion 12a of the upper rail 12 moves froward/rearward together. Consequently, the rear projecting piece 222e being the engagement plate control portion comes into contact with the inner surface of one of the memory-side projecting pieces 212d, 212d to press it forward or rearward. Since the base portion 211 of the memory member 210 is slidable along the the sidewall portion 11f of the lower rail 11, when the memory-side projecting pieces 212d, 212d are pressed, the memory member 210 moves forward/rearward together with the memory member control mechanism 220, that is, together with the upper rail 12.

After predetermined position adjustment is performed, the force which has caused the front end portion 155a of the locking release operation member 155 to operate upward is canceled. Since the force which has moved the rear end portion 155b of the locking release operation member 155 relatively downward is eliminated, the locking plate 151 and the wedge structures 153, 153 move up along the locking plate guide shaft 152a and the wedge guide shafts 152b, 152b owing to the resiliency of the spring 152c for locking plate and the springs 152d, 152d for wedges. Consequently, the slide locking engagement portions 11e, 11e of the lower rail 11 are inserted to the hole portions 151b, 151b of the locking plate 151 from their teeth tips, resulting in the locking. Note that, in this state, in the memory member 210 of the walk-in mechanism 20, the inclined surface 212c between the memory-side projecting pieces 212d, 212d is kept separated from the slide locking engagement portions 11e by the rear projecting piece 222e being the engagement plate control portion of the memory member control mechanism 220 as described above (state in FIG. 7(b)).

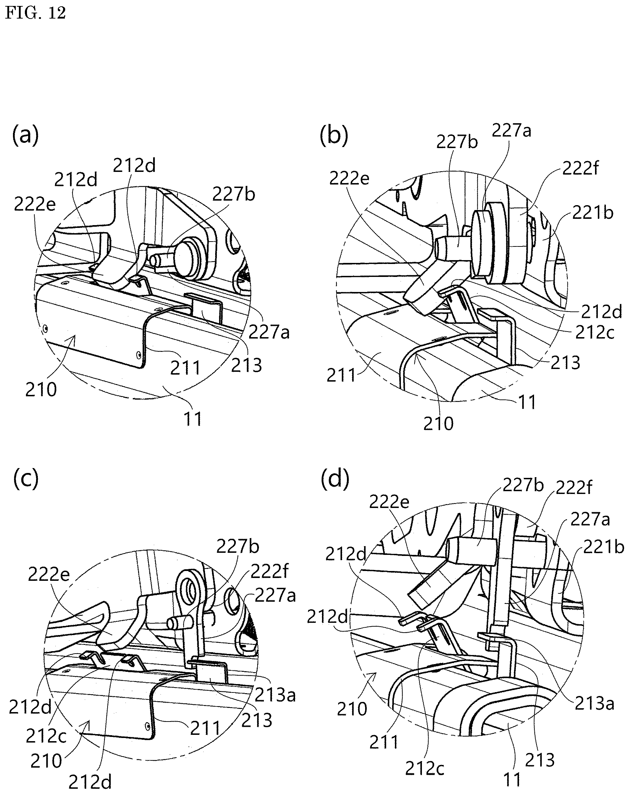

Next, the walk-in operation will be described. First, the walk-in lever 231 of the walk-in mechanism 20 is operated. Consequently, not only the first cable 232 but also the second cable 233 is pulled. Since the second cable 233 bifurcates in the middle and has the other ends coupled to the first shafts 223 of the left and right sliders 10, the first shafts 223 are pulled rearward (the F1 direction in FIG. 10(a)) in the long holes 222b2. When the first cable 232 is pulled, the locking release plate 3b of the reclining adjuster 3 moves in the locking release direction to release the locking of the reclining adjuster 3, so that the seat back 2B is reclined forward even though the reclining lever 3a is not operated. When the seat back 2B is reclined forward, the bracket 236 attached to the seat back 2B rotates the coupling plate 235 forward. Consequently, the two third cables 234 coupled to the coupling plate 235 are pulled rearward to rotate a lower portion of the vertical plate portion 224c of the second link 224 of each of the sliders 10 rearward (the F2 direction in FIG. 10(a)). As a result, the action plate portion 224a rotates forward and downward, and the second link projecting portion 224a3 projecting forward abuts, from above, on the first shaft 223 located at the rear in the long holes 222b2, 222c2. Then, the first link 222 which has been in the state illustrated in FIG. 10(a) and FIGs. 12(a), (b) rotates about the shaft portion 221c for link in the direction such that its front portion plate portion 222a side moves downward (the arrow F3 direction in FIG. 10(b)), and the front projecting piece 222d enters the inside of the through hole 12a1 for projecting piece of the upper wall portion 12a of the upper rail 12 to press the portion close to the rear end portion 155b of the locking release operation member 155 of the slide locking mechanism 15, so that the release plate 154 is pressed downward to move the locking plate 151 downward (the arrow F4 direction in FIG. 10(b)), resulting in the release of the locking of the slide locking mechanism 15.

Here, when the locking of the slide locking mechanisms 15 is released, the first link 222 rotates about the shaft portion 221c for link in the direction such that its front portion plate portion 222a side moves downward as described above. Accordingly, as illustrated in FIG. 10(c), the rear portion of the first link 222 moves relatively upward. Consequently, as illustrated in FIGs. 10(c) and FIGs. 12(c), (d), the rear projecting piece 222e moves upward (the arrow F5 direction in FIG. 10(c)) to separate from between the memory-side projecting pieces 212d, 212d of the memory member 10, so that the force of the rear projecting piece 222e causing the inclined surface 212c to separate from the slide locking engagement portions 11e against the spring force of the engagement plate portion 212 is eliminated, and the memory engagement portions 212a, 212a of the engagement plate portion 212 enter the spaces between the adjacent slide locking engagement portions 11e, 11e to be engaged therewith owing to the spring force (restoring force) of the engagement plate portion 212. That is, the position of the memory engagement portions 212a, 212a shifts from the state in FIG. 7(b) to the state in FIG. 7(c).

In the state in which the first link 222 has the posture substantially parallel to the upper wall portion 12a of the upper rail 12, the posture maintaining pin 227b is located close to the front portions of the guide holes 221b3, 221b3 of the attachment bracket 221 by being restricted by the stepped portion 222g provided in front of the rear end portion 222f of the first link 222 as described above. However, when the rear end portion 222f of the first link 222 moves relatively upward, the stepped portion 222g also moves upward, so that the posture maintaining pin 227b becomes free from the restriction to move rearward in the guide holes 212b3, 221b3 owing to the restoring force of the spring 227c for posture maintaining pin. When the posture maintaining pin 227b moves rearward, the lower edge of the rear end portion 222f of the first link 222 is located above the posture maintaining pin 227b (see FIG. 10(c)). This does not allow the rear end portion 222f of the first link 220 to move downward to maintain the posture that the first link 222 has when rotating about the shaft portion 221c for link in the direction such that the front portion plate portion 222a side moves downward. Incidentally, while the posture maintaining pin 227b is thus moving rearward, the stopper link 227a rotates about the second shaft 227d rearward from under to have a posture projecting in the downward direction (see FIGs. 10(b), (c) and FIGs, 12(c), (dd)).

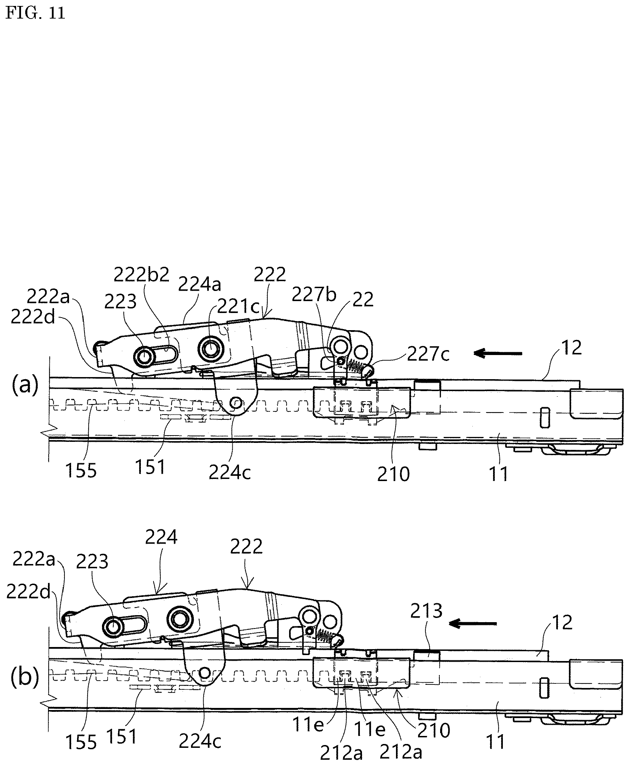

Since the first link 220 maintains the posture that it has when rotating about the shaft portion 221c for link in the direction such that the front portion plate portion 222a side moves downward, the state in which the locking of the slide locking mechanism 15 is released by the front projecting piece 222d is maintained, and the memory engagement portions 212a of the memory member 210 are engaged with the slide locking engagement portions 11e, 11e, so that the upper rail 12 slides up to the front-most end position together with the memory member control mechanism 220 while the memory member 210 is left at the engagement position on the lower rail 11 side as illustrated in FIGs. 11(a), (b). Therefore, a walk-in space is formed between the seat (the seat cushion 2A and the seat back 2B) supported by the upper rails 12 and the rear seat, allowing a person to get on/off to/from the rear seat.

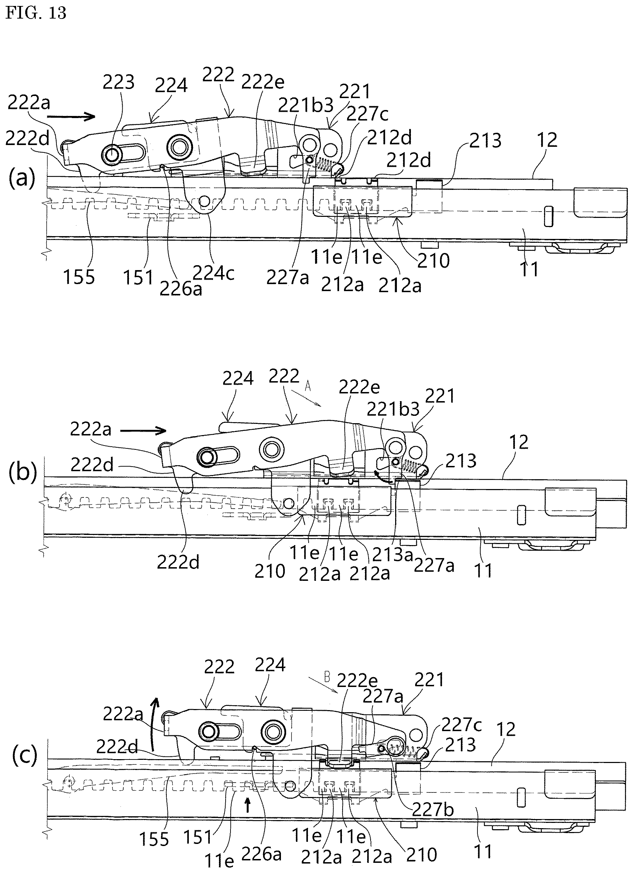

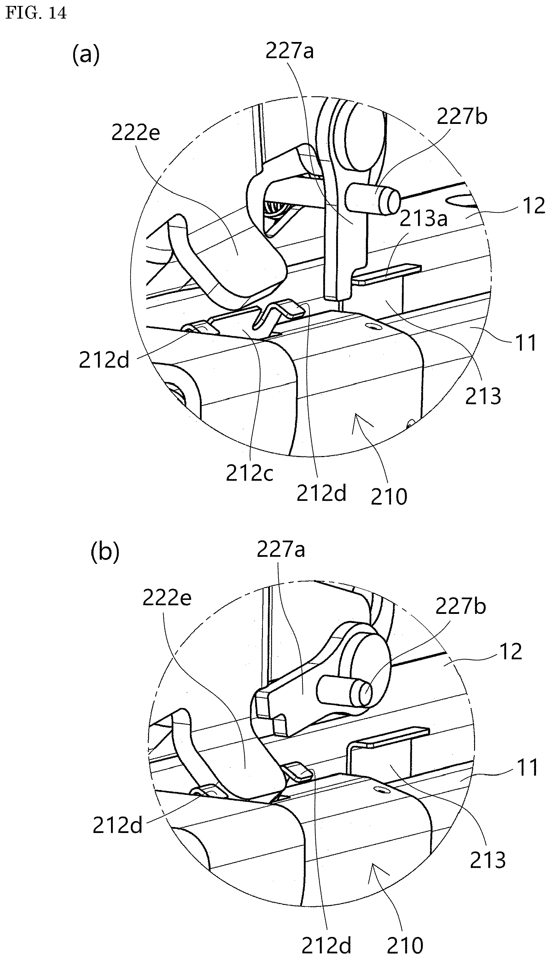

To restore the original state from the walk-in state, the seat is pushed rearward while the slide locking mechanism 15 is kept in the locking release state. The memory member control mechanism 220 also moves rearward together with the upper rail 12, but the stopper link 227a has the posture rotating downward about the second shaft 227d (see FIG. 13(a)) as described above, and if the memory member control mechanism 220 moves rearward in this state, the stopper link 227a passes beyond the inclined surface 212c of the engagement plate portion 212 of the memory member 210 to abut on the upper portion 213a of the L-shaped stopper 213 located more rearward than the inclined surface 212c (see FIG. 13(b) and FIG. 14(a)). Note that the relative position of the L-shaped stopper 213 and the rear projecting piece 222e in the first link 220 is set such that, at this time, the rear projecting piece 222e is located at a position corresponding to the space between the memory-side projecting pieces 212d, 212d in the engagement plate portion 212.

The position where the stopper link 227a abuts on the L-shaped stopper 213 is the position at which the upper rail 12 is slide-adjusted before the walk-in operation. When it abuts on the L-shaped stopper 213, as illustrated in FIG. 13(c) and FIG. 14(b), the stopper link 227a rotates such that its lower end moves forward, and accordingly, the posture maintaining pin 227b moves forward in the guide holes 221b3, 221b3. Consequently, the posture maintaining pin 227b moves from the lower edge of the rear end portion 222f of the first link 220 toward the stepped portion 222g located in front of the rear end portion 222f. Since the posture maintaining pin 227b becomes absent under the lower edge of the rear end portion 222f of the first link 220, the front portion plate portion 222a side of the first link 220 moves in the ascending direction owing to the restoring force of the spring 226 for link, and the force pressing the locking release operation member 155 downward by the front projecting piece 222d is also eliminated, bringing the slide locking mechanism 15 into the slide locking state.

Consequently, the upper rail 12 can return to the slide adjustment position which is set before the walk-in operation. At this time, the first link 222 has the posture substantially parallel to the upper wall portion 12a of the upper rail 12 again, and its rear end portion 222f is located at the rear of the posture maintaining pin 227b, so that the rearward movement of the posture maintaining pin 227b is restricted by the stepped portion 222g. Then, the rear projecting piece 222e enters so as to abut on a surface on the sidewall portion 11f side of the lower rail 11, of the inclined surface 121c between the memory-side projecting pieces 212d, 212d, to elastically deform the inclined surface 212c such that the inclined surface 212c is raised toward the sidewall portion 12b of the upper rail 12 (state in FIG. 7(b)). Consequently, the memory engagement portions 212a separate from the slide locking engagement portions 11e to be released from the engagement with the lower rail 11, the rear projecting piece 222e is capable of engaging with the memory-side projecting pieces 212d, 212d at the time of sliding movement, and the memory member 210 becomes movable following the upper rail 12 again. Thereafter reclining the seat back 2B rearward returns the seat (the seat cushion 2A and the seat back 2B) to the original state. When the seat back 2B returns rearward from the forward reclining position by a predetermined angle, the bracket 236 provided on the seat back 2B separates from the coupling plate 235, and the coupling plate 235 is returned to the original position by the spring member (not illustrated).

As the slide locking mechanism 15, the above description shows the structure which engages with the slide locking engagement portions 11e on both sides of the lower rail 11 to perform the slide locking, but it should be noted that this is not restrictive, and it may be one that engages only with the one-side slide locking engagement portions 11e, a structure in which the locking plate 151 is engaged with the slide locking engagement portions 11e not by moving up and down but by moving in the width direction of the lower rail 11 to separate from or come into contact with the slide locking engagement portions 11e, or the like. The slide locking mechanism 15 only needs to have the function capable of setting the normal slide adjustment position and is not limited to the above-described one at all.

### Explanation of Reference Signs

- 1: seat sliding device

- 10: slider
- 11: lower rail
- 11e: slide locking engagement portion
- 11f: sidewall portion
- 12: upper rail
- 12a: upper wall portion
- 12a1: through hole for projection
- 12b: sidewall portion
- 120: upper bracket
- 121: upper surface portion
- 122: side surface portion
- 15: slide locking mechanism
- 151: locking plate
- 155: locking release operation member
- 20: walk-in mechanism
- 210: memory member
- 211: base portion
- 212: engagement portion
- 212a: memory engagement portion
- 220: memory member control mechanism
- 221: attachment bracket
- 222: first link
- 222d: front projecting piece
- 222e: rear projecting piece
- 224: second link 224
- 226: spring for link
- 227: posture maintaining mechanism
- 230: walk-in operation mechanism

## Claims

1. A seat sliding device (1) comprising:
a lower rail (11) including a slide locking engagement portion (11e) on at least one of longitudinal-direction sidewall portions (11f);
an upper rail (12) slidably provided on the lower rail (11) and supporting a seat;
a slide locking mechanism (15) which includes an engagement portion for slide (151b) engageable with the slide locking engagement portion (11e) and which locks the upper rail (12) to the lower rail (11) at an appropriate slide adjustment position; and
a walk-in mechanism (20) which reclines a seat back of the seat forward and moves the seat forward,
wherein the walk-in mechanism (20) includes a memory member (210) which stays at the slide adjustment position independently of the upper rail (12) at the time of a walk-in operation to control a return position of the upper rail (12) after the walk-in operation to the slide adjustment position,
wherein a portion with which the memory member (210) is engaged in order to stay at the slide adjustment position is the slide locking engagement portion (11e),
wherein the memory member (210) includes a memory engagement portion (212a) provided at a position corresponding to the slide locking engagement portion (11e) of the lower rail (11) and biased in such a direction as to be engaged with the slide locking engagement portion (11e), and
wherein, on the upper rail (12), a memory member control mechanism (220) is provided which, except at the time of the walk-in operation, releases the engagement of the memory engagement portion (212a) with the slide locking engagement portion (11e) to enable the memory member (210) to follow the upper rail (12), and at the time of the walk-in operation, allows the memory engagement portion (212a) to be engaged with the slide locking engagement portion (11e),
**characterized in that** the memory member (210) includes:
a base portion (211) supported to be movable along the sidewall portion (11f) of the lower rail (11); and
an engagement plate portion (212) provided integrally with the base portion (211), including the memory engagement portion (212a), and having spring force biasing the memory engagement portion (212a) in the direction such that the memory engagement portion (212a) is engaged with the slide locking engagement portion (11e).

2. The seat sliding device according to claim 1,
wherein the sidewall portion (11f) of the lower rail (11) has an outer wall portion (11b), an upper wall portion (11c), and an inner wall portion (11d), and the slide locking engagement portion (11e) is provided on the inner wall portion (11d) along the longitudinal direction, and
wherein, in the memory member (210):
the base portion (211) has a substantially U-shaped cross section straddling the upper wall portion (11c) of the sidewall portion (11f);
the engagement plate portion (212) is folded upward from a lower edge portion of an inner surface portion (211c), of the base portion (211), which is located on an inner side of the sidewall portion (11f), and has an upper edge portion extending up to a position higher than a height of the base portion (211) and biased in such a direction as to approach the slide locking engagement portion (11e); and
the inner surface portion (211c) of the base portion (211) has a cutout portion (211d) formed at a position facing the engagement plate portion (212), and the memory engagement portion (212a) formed in the engagement plate portion (212) is engageable with the slide locking engagement portion (11e) through the cutout portion (212d).

3. The seat sliding device according to claim 1 or 2,
wherein the memory member (210) is formed of a leaf spring material, and the engagement plate portion (212) is located between the lower rail (11) and the upper rail (12) and has a function of reducing looseness between the lower rail (11) and the upper rail (12).

4. The seat sliding device according to any one of claims 1 to 3,
wherein the memory member control mechanism (220) includes an engagement plate control portion (222e) which, except at the time of the walk-in operation, comes into contact with the engagement plate portion (212) of the memory member (210) to displace the engagement plate portion (212) in a direction such that the memory engagement portion (212a) separates from the slide locking engagement portion (11e), and at the time of the walk-in operation, separates from the engagement plate portion (212).

5. The seat sliding device according to claim 4,
wherein the slide locking mechanism (15) includes: a locking plate member (151) having the engagement portion for slide (151b) and supported on the upper rail (12) to be movable up and down; and a locking release operation member (155) which has a front portion (155a) projecting outward from a front side of the upper rail (12) and engages/disengages the engagement portion for slide (151b) with/from the slide locking engagement portion (11e) when a rear portion (155b) of the locking release operation member (155) is displaced by the up/down operation of the front portion to move the locking plate member (151) up/down,
wherein the memory member control mechanism (220) includes:
an attachment bracket (221) fixed to an upper wall portion (12a) of the upper rail (12);
a first link (222) which is rotatably supported on the attachment bracket (221), and which, when in a normal posture, does not move down the locking plate member (151), but in a state in which a front portion of the first link (222) moves downward, moves down the locking plate member (151) by a front projecting piece (222d) which is provided on the front portion to project downward, to release the engagement with the slide locking engagement portion(11e);
a second link (224) which is rotatably supported on the attachment bracket (221), is capable of operating in a direction such that a front end side of the second link (224) moves downward in accordance with the forward reclining of the seat back, rotates independently when the seat back is reclined forward except at the time of the walk-in operation, but when operating in the direction such that the front end moves downward at the time of the walk-in operation, operates the first link (222) in the direction such that the front portion of the first link (222) moves downward; and
a posture maintaining mechanism (227) which maintains a posture that the first link (222) has when the front portion moves downward, at the time of the walk-in operation, and
wherein the engagement plate control portion (222e) is a projecting piece projecting downward at a rear portion of the first link (222), and when the first link (222) is in the normal posture, comes into contact with the engagement plate portion (212) of the memory member (210) to elastically deform the engagement plate portion (212) in the direction such that the memory engagement portion (212a) separates from the slide locking engagement portion (11e), while being displaced upward to separate from the engagement plate portion (212) when the front portion of the first link (222) moves downward, at the time of the walk-in operation.

## Patentansprüche

1. Sitzgleitvorrichtung (1), umfassend:
eine untere Schiene (11), welche einen Schlittenblockierungseingriffsabschnitt (11e) auf zumindest einem von Längsrichtungsseitenwandabschnitten(11f) beinhaltet;
eine obere Schiene (12), welche verschiebbar auf der unteren Schiene (11) angeordnet ist und einen Sitz trägt;
einen Schlittenblockierungsmechanismus (15), welcher einen Eingriffsabschnitt für Schlitten (151b) beinhaltet, welcher in den Schlittenblockierungseingriffsabschnitt (11e) eingreifen kann und welcher die obere Schiene (12) an einer passenden Schlitteneinstellungsposition an der unteren Schiene (11) blockiert; und
einen Einstiegsmechanismus (20), welcher eine Sitzlehne des Sitzes nach vor neigt und den Sitz nach vor bewegt,
wobei der Einstiegsmechanismus (20) ein Speicherelement (210) beinhaltet, welches während der Zeit eines Einstiegsvorgangs unabhängig von der oberen Schiene (12) an der Schlitteneinstellungsposition verbleibt, um eine Rückkehrposition der oberen Schiene (12) nach dem Einstiegsvorgang zu der Schlitteneinstellungsposition zu steuern,
wobei ein Abschnitt, mit welchem das Speicherelement (210) in Eingriff steht, um an der Schlitteneinstellungsposition zu verbleiben, der Schlittenblockierungseingriffsabschnitt (11e) ist,
wobei das Speicherelement (210) einen Speichereingriffsabschnitt (212a) beinhaltet, welcher an einer Position angeordnet ist, welche dem Schlittenblockierungseingriffsabschnitt (11e) der unteren Schiene (11) entspricht, und in eine solche Richtung vorgespannt ist, dass er in den Schlittenblockierungseingriffsabschnitt (11e) eingreift, und
wobei auf der oberen Schiene (12) ein Speicherelementsteuermechanismus (220) angeordnet ist, welcher außer während der Zeit des Einstiegsvorgangs den Eingriff des Speichereingriffsabschnitts (212a) in den Schlittenblockierungseingriffsabschnitt (11e) löst, um dem Speicherelement (210) zu ermöglichen, der oberen Schiene (12) zu folgen, und während der Zeit des Einstiegsvorgangs dem Speichereingriffsabschnitt (212a) erlaubt, in den Schlittenblockierungseingriffsabschnitt (11e) einzugreifen,
**dadurch gekennzeichnet, dass** das Speicherelement (210) beinhaltet:
einen Basisabschnitt (211), welcher getragen wird, um entlang des Seitenwandabschnitts (11f) der unteren Schiene (11) beweglich zu sein; und
einen Eingriffsplattenabschnitt (212), welcher einstückig mit dem Basisabschnitt (211) angeordnet ist, welcher den Speichereingriffsabschnitt (212a) beinhaltet und Federkraft zum Vorspannen des Speichereingriffsabschnitt (212a) in die Richtung aufweist, dass der Speichereingriffsabschnitt (212a) in den Schlittenblockierungseingriffsabschnitt (11e) eingreift.

2. Sitzgleitvorrichtung nach Anspruch 1,
wobei der Seitenwandabschnitt (11f) der unteren Schiene (11) einen Außenwandabschnitt (11b), einen oberen Wandabschnitt (11c) und einen Innenwandabschnitt (11d) aufweist, und der Schlittenblockierungseingriffsabschnitt (11e) auf dem Innenwandabschnitt (11d) entlang der Längsrichtung angeordnet ist, und
wobei in dem Speicherelement (210):
der Basisabschnitt (211) einen im Wesentlichen U-förmigen Querschnitt aufweist, welcher den oberen Wandabschnitt (11c) des Seitenwandabschnitts (11f) überspannt;
der Eingriffsplattenabschnitt (212) von einem unteren Randabschnitt eines inneren Oberflächenabschnitts (211c) des Basisabschnitts (211), welcher sich an einer Innenseite des Seitenwandabschnitts (11f) befindet, aufwärts gefaltet ist, und einen oberen Randabschnitt aufweist, welcher sich bis zu einer Position erstreckt, welche höher ist als eine Höhe des Basisabschnitts (211), und in eine solche Richtung vorgespannt ist, dass er sich dem Schlittenblockierungseingriffsabschnitt (11e) nähert; und
der innere Oberflächenabschnitt (211c) des Basisabschnitts (211) einen Ausschnittsabschnitt (211d) aufweist, welcher an einer Position gebildet ist, welche dem Eingriffsplattenabschnitt (212) gegenüberliegt, und der Speichereingriffsabschnitt (212a), welcher in dem Eingriffsplattenabschnitt (212) gebildet ist, in den Schlittenblockierungseingriffsabschnitt (11e) durch den Ausschnittsabschnitt (212d) eingreifen kann.

3. Sitzgleitvorrichtung nach Anspruch 1 oder 2,
wobei das Speicherelement (210) aus einem Blattfedermaterial gebildet ist, und der Eingriffsplattenabschnitt (212) sich zwischen der unteren Schiene (11) und der oberen Schiene (12) befindet und eine Funktion zum Verringern von Lockerheit zwischen der unteren Schiene (11) und der oberen Schiene (12) aufweist.

4. Sitzgleitvorrichtung nach einem der Ansprüche 1 bis 3,
wobei der Speicherelementsteuermechanismus (220) einen Eingriffsplattensteuerabschnitt (222e) beinhaltet, welcher außer während der Zeit des Einstiegsvorgangs in Kontakt mit dem Eingriffsplattenabschnitt (212) des Speicherelements (210) kommt, um den Eingriffsplattenabschnitt (212) in eine Richtung zu verschieben, dass der Speichereingriffsabschnitt (212a) sich von dem Schlittenblockierungseingriffsabschnitt (11e) trennt, und während der Zeit des Einstiegsvorgangs sich von dem Eingriffsplattenabschnitt (212) trennt.

5. Sitzgleitvorrichtung nach Anspruch 4,
wobei der Schlittenblockierungsmechanismus (15) beinhaltet: ein Blockierungsplattenelement (151), welches den Eingriffsabschnitt für Schlitten (151b) aufweist und auf der oberen Schiene (12) getragen wird, um rauf und runter beweglich zu sein; und ein Blockierungsfreigabevorgangelement(155), welches einen Frontabschnitt (155a) aufweist, welcher von einer Frontseite der oberen Schiene (12) nach außen vorsteht und den Eingriffsabschnitt für Schlitten (151b) in/aus Eingriff mit dem Schlittenblockierungseingriffsabschnitt (11e) bringt, wenn ein hinterer Abschnitt (155b) des Blockierungsfreigabevorgangelements(155) durch den Rauf- /Runtervorgang des Frontabschnitts zum Rauf-/Runterbewegen des Blockierungsplattenelements (151) verschoben wird,
wobei der Speicherelementsteuermechanismus (220) beinhaltet:
eine Montageklammer (221), welche an einem oberen Wandabschnitt (12a) der oberen Schiene (12) befestigt ist;
eine erste Verbindung (222), welche drehbar auf der Montageklammer (221) getragen wird, und welche, wenn in einer normalen Stellung, sich nicht entlang des Blockierungsplattenelement (151) hinunter bewegt, aber in einem Zustand, in welchem ein Frontabschnitt der ersten Verbindung (222) sich nach unten bewegt, sich entlang des Blockierungsplattenelements (151) durch ein vorderes vorstehendes Stück (222d), welches an dem Frontabschnitt angeordnet ist, um nach unten vorzustehen, hinunter bewegt, um den Eingriff in den Schlittenblockierungseingriffsabschnitt (11e) zu lösen;
eine zweite Verbindung (224), welche drehbar auf der Montageklammer (221) getragen wird, in der Lage ist, in einer Richtung zu arbeiten, dass ein vorderes Endstück der zweiten Verbindung (224) sich in Übereinstimmung mit dem Vorwärtsneigen der Sitzlehne nach unten bewegt, sich unabhängig dreht, wenn die Sitzlehne sich nach vorn neigt, außer während der Zeit des Einstiegsvorgangs, jedoch wenn sie in der Richtung arbeitet, dass das vordere Ende sich während der Zeit des Einstiegsvorgangs nach unten bewegt, die erste Verbindung (222) in die Richtung bewegt, dass der Frontabschnitt der ersten Verbindung (222) sich nach unten bewegt; und
einen Stellungsbeibehaltungsmechanismus(227), welcher während der Zeit des Einstiegsvorgangs eine Stellung beibehält, welche die erste Verbindung (222) aufweist, wenn der Frontabschnitt sich nach unten bewegt, und
wobei der Eingriffsplattensteuerabschnitt (222e) ein vorstehendes Stück ist, welches an einem hinteren Abschnitt der ersten Verbindung (222) nach unten vorsteht, und wenn die erste Verbindung (222) sich in der normalen Stellung befindet, in Kontakt mit dem Eingriffsplattenabschnitt (212) des Speicherelements (210) kommt, um den Eingriffsplattenabschnitt (212) in die Richtung elastisch zu verformen, sodass der Speichereingriffsabschnitt (212a) sich von dem Schlittenblockierungseingriffsabschnitt (11e) trennt, während es während der Zeit des Einstiegsvorgangs nach oben verschoben wird, um sich von dem Eingriffsplattenabschnitt (212) zu trennen, wenn der Frontabschnitt der ersten Verbindung (222) sich nach unten bewegt.

## Revendications

1. Dispositif de coulissement de siège (1) comprenant :
un rail inférieur (11) incluant une partie de mise en prise de verrouillage de coulisse (11e) sur au moins une de parties parois latérales de direction longitudinale (11f);
un rail supérieur (12) prévu de manière coulissante sur le rail inférieur (11) et supportant un siège ;
un mécanisme de verrouillage de coulisse (15) qui inclut une partie de mise en prise pour coulisse (151b) pouvant être mise en prise avec la partie de mise en prise de verrouillage de coulisse (11e) et qui verrouille le rail supérieur (12) sur le rail inférieur (11) à une position d'ajustement de coulisse appropriée ; et
un mécanisme de déclenchement (20) qui incline un dossier du siège vers l'avant et fait bouger le siège vers l'avant,
dans lequel le mécanisme de déclenchement (20) inclut un élément à mémoire (210) qui reste à la position d'ajustement de coulisse indépendamment du rail supérieur (12) au moment d'une opération de déclenchement pour commander une position de retour du rail supérieur (12) après l'opération de déclenchement à la position d'ajustement de coulisse,
dans lequel une partie avec laquelle l'élément à mémoire (210) est mis en prise afin de rester à la position d'ajustement de coulisse est la partie de mise en prise de verrouillage de coulisse (11e),
dans lequel l'élément à mémoire (210) inclut une partie de mise en prise à mémoire (212a) prévue à une position correspondant à la partie de mise en prise de verrouillage de coulisse (11e) du rail inférieur (11) et déviée dans une direction de manière à être mise en prise avec la partie de mise en prise de verrouillage de coulisse (11e), et
dans lequel, sur le rail supérieur (12), un mécanisme de commande d'élément à mémoire (220) est prévu qui, sauf au moment de l'opération de déclenchement, libère la mise en prise de la partie de mise en prise à mémoire (212a) avec la partie de mise en prise de verrouillage de coulisse (11e) pour que l'élément à mémoire (210) puisse suivre le rail supérieur (12), et au moment de l'opération de déclenchement, permet à la partie de mise en prise à mémoire (212a) d'être mise en prise avec la partie de mise en prise de verrouillage de coulisse (11e),
**caractérisé en ce que** l'élément à mémoire (210) inclut :
une partie base (211) supportée pour être mobile le long de la partie paroi latérale (11f) du rail inférieur (11) ; et
une partie plaque de mise en prise (212) faisant partie intégrante de la partie base (211), incluant la partie de mise en prise à mémoire (212a), et présentant une tension de ressort déviant la partie de mise en prise à mémoire (212a) dans la direction qui fait que la partie de mise en prise à mémoire (212a) est mise en prise avec la partie de mise en prise de verrouillage de coulisse (11e).

2. Dispositif de coulissement de siège selon la revendication 1,
dans lequel la partie paroi latérale (11f) du rail inférieur (11) présente une partie paroi extérieure (11b), une partie paroi supérieure (11c) et une partie paroi intérieure (11d), et la partie de mise en prise de verrouillage de coulisse (11e) est prévue sur la partie paroi intérieure (11d) le long de la direction longitudinale, et
dans lequel, dans l'élément à mémoire (210) :
la partie base (211) présente une section transversale sensiblement en forme de U enjambant la partie paroi supérieure (11c) de la partie paroi latérale (11f) ;
la partie plaque de mise en prise (212) est pliée vers le haut à partir d'une partie bord inférieur d'une partie surface supérieure (211c), de la partie base (211), qui est située sur un côté intérieur de la partie paroi latérale (11f), et présente une partie bord supérieur s'étendant vers le haut jusqu'à une position plus haute qu'une hauteur de la partie base (211) et déviée dans une direction de manière à s'approcher de la partie de mise en prise de verrouillage de coulisse (11e) ; et
la partie surface intérieure (211c) de la partie base (211) présente une partie découpée (211d) formée à une position faisant face à la partie plaque de mise en prise (212), et la partie de mise en prise à mémoire (212a) formée dans la partie plaque de mise en prise (212) peut être mise en prise avec la partie de mise en prise de verrouillage de coulisse (11e) à travers la partie découpée (212d).

3. Dispositif de coulissement de siège selon la revendication 1 ou 2,
dans lequel l'élément à mémoire (210) est formé à partir d'un matériau de ressort à lames, et la partie plaque de mise en prise (212) est située entre le rail inférieur (11) et le rail supérieur (12) et présente une fonction de réduction du relâchement entre le rail inférieur (11) et le rail supérieur (12).

4. Dispositif de coulissement de siège selon l'une quelconque des revendications 1 à 3,
dans lequel le mécanisme de commande d'élément à mémoire (220) inclut une partie de commande de plaque de mise en prise (222e) qui, sauf au moment de l'opération de déclenchement, vient en contact avec la partie plaque de mise en prise (212) de l'élément à mémoire (210) pour déplacer la partie plaque de mise en prise (212) dans une direction qui fait que la partie de mise en prise à mémoire (212a) se sépare de la partie de mise en prise de verrouillage de coulisse (11e), et au moment de l'opération de déclenchement, se sépare de la partie plaque de mise en prise (212).

5. Dispositif de coulissement de siège selon la revendication 4,
dans lequel le mécanisme de verrouillage de coulisse (15) inclut : un élément plaque de verrouillage (151) présentant la partie de mise en prise pour coulisse (151b) et supporté sur le rail supérieur (12) pour pouvoir monter et descendre; et un élément d'opération de libération de verrouillage (155) qui présente une partie avant (155a) faisant saillie vers l'extérieur à partir d'un côté avant du rail supérieur (12) et met en prise/éloigne la partie de mise en prise pour coulisse (151b) avec/de la partie de mise en prise de verrouillage de coulisse (11e) lorsqu'une partie arrière (155b) de l'élément d'opération de libération de verrouillage (155) est déplacée par l'opération de montée/descente de la partie avant pour faire monter/descendre l'élément plaque de verrouillage (151),
dans lequel le mécanisme de commande d'élément à mémoire (220) inclut :
un soutien d'attache (221) fixé à une partie paroi supérieure (12a) du rail supérieur (12) ;
une première liaison (222) qui est supportée de manière rotative sur le soutien d'attache (221), et qui, lorsqu'elle est dans une posture normale, ne fait pas descendre l'élément plaque de verrouillage (151), mais dans un état dans lequel une partie avant de la première liaison (222) bouge vers le bas, fait descendre l'élément plaque de verrouillage (151) par une pièce en saillie avant (222d) qui est prévue sur la partie avant pour faire saillie vers le bas, pour libérer la mise en prise avec la partie de mise en prise de verrouillage de coulisse (11e) ;
une seconde liaison (224) qui est supportée de manière rotative sur le soutien d'attache (221), est capable de fonctionner dans une direction qui fait qu'un côté extrémité avant de la seconde liaison (224) bouge vers le bas conformément à l'inclinaison vers l'avant du dossier, tourne indépendamment lorsque le dossier est incliné vers l'avant sauf au moment de l'opération de déclenchement, mais lors d'un fonctionnement dans la direction qui fait que l'extrémité avant bouge vers le bas au moment de l'opération de déclenchement, fait fonctionner la première liaison (222) dans la direction qui fait que la partie avant de la première liaison (222) bouge vers le bas ; et
un mécanisme de maintien de posture (227) qui maintient une posture que la première liaison (222) présente lorsque la partie avant bouge vers le bas, au moment de l'opération de déclenchement, et
dans lequel la partie de commande de plaque de mise en prise (222e) est une pièce en saillie faisant saillie vers le bas au niveau d'une partie arrière de la première liaison (222), et lorsque la première liaison (222) est dans la posture normale, vient en contact avec la partie plaque de mise en prise (212) de l'élément à mémoire (210) pour déformer élastiquement la partie plaque de mise en prise (212) dans la direction qui fait que la partie de mise en prise à mémoire (212a) se sépare de la partie de mise en prise de verrouillage de coulisse (11e), tout en étant déplacée vers le haut pour se séparer de la partie plaque de mise en prise (212) lorsque la partie avant de la première liaison (222) bouge vers le bas, au moment de l'opération de déclenchement.
